Europäisches Patentamt

European Patent Office

Office européen des brevets

(11) Veröffentlichungsnummer: **0 187 204**
**A2**

(12) # EUROPÄISCHE PATENTANMELDUNG

(21) Anmeldenummer: 85112503.9

(22) Anmeldetag: 03.10.85

(51) Int. Cl.⁴: **G 05 G 5/04**

(30) Priorität: 10.11.84 DE 3441232

(43) Veröffentlichungstag der Anmeldung:
16.07.86 Patentblatt 86/29

(84) Benannte Vertragsstaaten:
AT CH DE FR GB IT LI

(71) Anmelder: ROBERT BOSCH GMBH
Postfach 50
D-7000 Stuttgart 1(DE)

(72) Erfinder: Fimpel, Walter, Ing. grad.
Kohlbackerstrasse 15
D-7580 Bühl(DE)

(72) Erfinder: Stuffer, Kurt
Katzenbach 44
D-7582 Bühlertal(DE)

(54) Anschlagvorrichtung für bewegte Teile, insbesondere von Handhabungsgeräten der industriellen Fertigung.

(57) Anschlagvorrichtung für bewegte Teile, insbesondere von Handhabungsgeräten, mit einer drehbar gelagerten Anschlagscheibe (20), an welcher mehrere, in unterschiedlichen axialen Ebenen angeordnete Anschlagflächen (26) gebildet sind. Die Anschlagscheibe (20) ist axial verschiebbar gelagert und durch eine Feder (40) von einem Festanschlag (34) weg gegen eine das bewegte Teil (10) abfangende Ausgangsstellung gedrückt. Dadurch ist es möglich, einen berührungslos betätigbaren Sensor (50) zum Abfragen der Anschlagbewegung vorzusehen, die Anschlagbewegung zu dämpfen und die Anschlagscheibe (20) samt Feder (40) und Sensor (50), sowie den Drehantrieb (30) und gegebenenfalls weitere Sensoren (58) für programmierte Steuerung zu einem Modul (60) zusammenzufassen.

EP 0 187 204 A2

./...

R.
12.15.1985 Ki/Le

0187204

ROBERT BOSCH GMBH, 7000 STUTTGART 1

Anschlagvorrichtung für bewegte Teile, insbesondere von Handhabungsgeräten der industriellen
Fertigung

Stand der Technik

Die Erfindung geht aus von einer Anschlagvorrichtung für
bewegte Teile nach der Gattung des Hauptanspruches. Bei
einer bekannten Anschlagvorrichtung dieser Gattung ist
die Anschlagscheibe axial unverschiebbar an einem Anschlaggehäuse gelagert, so daß das Anschlagen des bewegten Teils ungedämpft erfolgt oder das bewegte Teil
seinerseits mit Mitteln zum ungedämpften Anschlagen versehen sein muß. Außerdem läßt sich mit der bekannten
Anordnung eine berührungslose Abfrage des Anschlagvorgangs nicht ohne weiteres realisieren, weil in den
verschiedenen Schaltstellungen der Anschlagscheibe
die Teile nach dem Anschlagen einen unterschiedlichen
axialen Abstand zueinander einnehmen.

...

Vorteile der Erfindung

Die erfindungsgemäße Anordnung mit den kennzeichnenden Merkmalen des Hauptanspruchs hat demgegenüber den Vorteil, daß der Sensor für den Anschlagvorgang nicht die Stellung des bewegten Teils gegenüber der Anschlagscheibe, sondern die Stellung der Anschlagscheibe gegenüber dem Festanschlag abfrägt und daher in bzw. an das die Anschlagscheibe lagernde Gehäuse fest an- bzw. eingebaut sein kann. Dieses Gehäuse kann daher zusammen mit der Anschlagscheibe und dem Sensor als ein selbständiger Modul ausgebildet sein. Außerdem kann die auf die Anschlagscheibe einwirkende Feder so bemessen werden, daß allein schon durch sie das Anschlagen des bewegten Teils merklich gedämpft wird.

Durch die in den Unteransprüchen vorgeschlagenen Maßnahmen sind vorteilhafte Weiterbildungen der Anordnung nach Anspruch 1 möglich.

Zusätzlich zur Feder kann gemäß Anspruch 2 eine hydraulische Dämpfungseinrichtung für das bewegte Teil vorgesehen sein, welche vorteilhaft ebenfalls in oder an das die Anschlagscheibe lagernde Gehäuse ein- bzw. angebaut sein kann.

Eine kompakte Ausführung ergibt sich, wenn gemäß Anspruch 4 die Anschlagscheibe an einer drehbar und verschiebbar gelagerten Achse befestigt und der motorische Antrieb als Klinkenschaltwerk ausgeführt ist, dessen Klinkenrad unverdrehbar auf der Achse sitzt.

...

Weitere vorteilhafte Ausbildungen des Erfindungsgegenstandes sind in den Ansprüchen 5 bis 9 enthalten. Bei
Anordnung einer Steuerbuchse und eines Steuerschalters
gemäß den Ansprüchen 6 und 7 können die Schaltbewegungen
der Anschlagscheibe kontrolliert gesteuert werden. Die
Anordnung gemäß Anspruch 9 ordnet einem Sensor zwei
Funktionen zu, wodurch ein Sensor eingespart wird.

Zeichnung

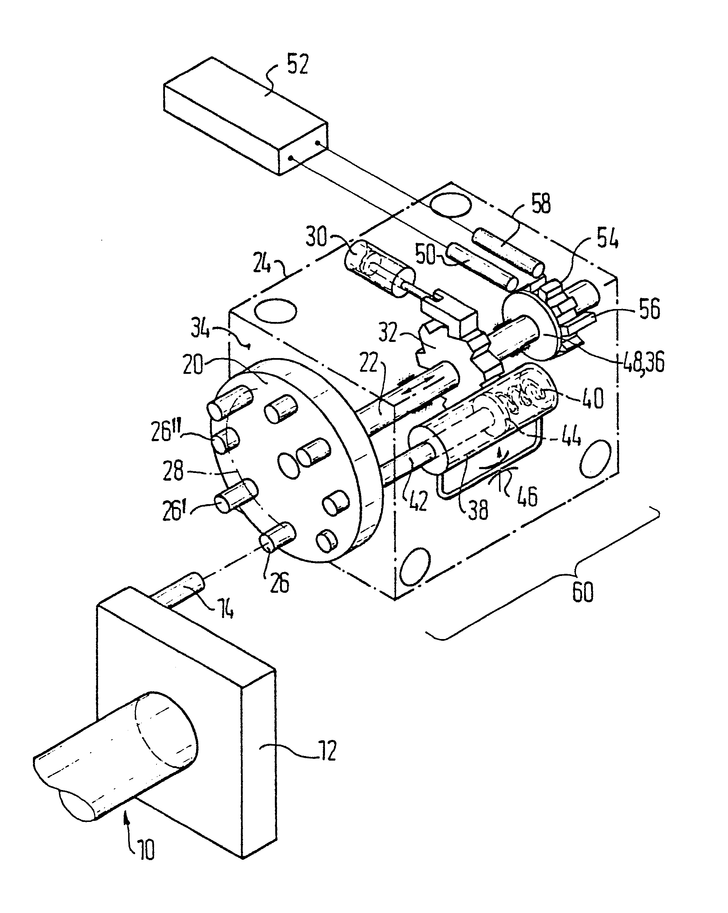

Ein Ausführungsbeispiel der Erfindung ist in der Zeichnung dargestellt und in der nachfolgenden Beschreibung
näher erläutert. Die einzige Figur zeigt perspektivisch
ein linearbewegtes Teil eines Handhabungsgeräts und eine
als Modul ausgeführte Anschlagvorrichtung für dieses Teil.

Beschreibung des Ausführungsbeispiels

Das linearbewegte Teil des Handhabungsgerätes ist ein
Schieber 10, der mit einer Flanschplatte 12 versehen
ist, an welcher ein Anschlagstift 14 sitzt. Der Schieber
10 ist unverdrehbar in einem nicht dargestellten Gehäuse einer Lineareinheit des Handhabungsgerätes geführt. Die Anschlagvorrichtung für den Schieber 10 hat
eine Anschlagscheibe 20, die fest auf einer Achse 22
sitzt, welche drehbar und verschiebbar in einem durch
strichpunktierte Linien angedeuten Gehäuse 24 gelagert
ist.

Die Anschlagscheibe 20 ist mit mehreren Anschlagstiften
26, 26' usw. versehen, die unterschiedlich lang und

. . .

über den Umfang gleichmäßig verteilt auf einer gemeinsamen Kreislinie 28 angeordnet sind. Der Parallelabstand der Achsen der Anschlagscheibe 20 und des Anschlagstiftes 14 am Schieber 10 entspricht dem Radius
der Kreislinie 28, so daß jeder der Anschlagstifte 26
durch Drehen der Anschlagscheibe 20 in eine mit dem
Anschlagstift 14 korrespondierende Lage gebracht werden
kann. Zum Drehen der Anschlagscheibe 20 ist ein in das
Gehäuse 24 integriertes Klinkenschaltwerk vorgesehen,
dessen Klinkenrad 32 auf der Achse 22 befestigt ist.
Die Zähne des Klinkenrades 32 sind so gegenüber der
Anschlagscheibe 20 angeordnet, daß am Ende eines
jeden Klinkenschalthubes einer der Anschlagstifte 26
in die Bewegungsbahn des Anschlagstiftes 14 ragt. Das
Klinkenschaltwerk 30 hält außerdem die Anschlagscheibe
20 in den einzelnen Schaltstellungen spielfrei fest.

Das axiale Bewegungsspiel der Anschlagscheibe 20 samt
Achse 22 und Klinkenrad 32 ist nach rechts durch die
als Festanschlag dienende vordere Stirnseite 34 des
Gehäuses 24 und nach links beispielsweise durch einen
mit der hinteren Stirnseite des Gehäuses 24 zusammenarbeitenden Bund 36 der Achse 22 begrenzt. Das Klinkenrad 32 ist so breit bemessen, daß die Klinke über den
ganzen Axialhub des Klinkenrades 32 hinweg in Eingriff
mit dessen Zähnen bleibt. Eine in einem Zylinder einer
hydraulischen Dämpfungseinrichtung 38 angeordnete Feder
40 ist bestrebt, über eine Kolbenstange 42 die Anschlagscheibe 20 nach links in die dargestellte Ausgangsstellung zu verschieben bzw. in dieser Stellung zu

...

halten.

Auf der Kolbenstange 42 sitzt ein Kolben 44 der den
Dämpfungszylinder in zwei Kammern teilt, die über
eine einseitig wirkende Drossel 46 miteinander verbunden sind. Die Dämpfungseinrichtung 38 dämpft die
nach rechts gerichteten Verschiebebewegungen der Anschlagscheibe 20, wogegen sie deren durch die Feder
40 hervorgerufenen Rückbewegung in die dargestellte
Ausgangsstellung keinen nennenswerten Widerstand
entgegensetzt. Auf der Achse 22 ist hinter dem Klinkenrad 32 eine metallische Bedämpfungsscheibe 48 für
einen den Anschlagvorgang abfragenden induktiven Sensor
50 befestigt. Die Anordnung ist so getroffen, daß die
Bedämpfungsscheibe 48 genau in der Ebene des Sensors
50 steht, wenn die Anschlagscheibe 20 an der vorderen
Stirnseite 34 des Gehäuses 24 anliegt. Der Durchmesser der Bedämpfungsscheibe 48 ist so bemessen,
daß der Sensor 50 ein Signal an ein Steuergerät 52
liefert, wenn die Anschlagscheibe 20 zur Anlage an
die Stirnseite 34 kommt.

Die Bedämpfungsscheibe 48 ist an einer Buchse 54
befestigt, die einen Zahnkranz mit einer der Anzahl
der Anschlagstifte 26 entsprechenden Anzahl von
Zähnen hat. Der Zahnkranz korrespondiert in der
gezeigten Ausgangsstellung der Anschlagscheibe 20
mit dem Sensor 50 und ist außerdem zu diesem so
ausgerichtet, daß jeweils eine Zahnlücke dem Sensor 50 gegenüberliegt, wenn ein Anschlagstift 26 der
Anschlagscheibe 20 mit dem Anschlagstift 14 des
Schiebers 10 korrespondiert. Der Grundkreisdurch-

...

messer des Zahnkranzes ist so bemessen, daß der Sensor
50 nicht anspricht, wenn eine Zahnlücke dem Sensor 50
gegenüberliegt. Der Kopfkreisdurchmesser ist gleich
oder größer als der Durchmesser der Bedämpfungsscheibe
48, so daß der Sensor 50 ein Signal an das Steuergerät
52 liefert, wenn das Klinkenschaltwerk 30 die Anschlagscheibe 20 um einen Schaltschritt weiterdreht.

Ein Zahn 56 am Umfang der Buchse 54 weicht von den
übrigen Zähnen dadurch ab, daß er über die hintere
Stirnseite der Buchse hinaus bis in den Einflußbereich
eines zweiten Sensors 58 verlängert ist. Der Zahn 56
ist so angeordnet, daß er dem Sensor 58 gegenübersteht,
wenn ein Anschlagstift 26 dem Anschlagstift 14 gleichachsig gegenüberliegt. In dieser Stellung des Zahnes 56
liefert der Sensor 58 einen Impuls als Referenzpunktmeldung an das Steuergerät 52.

Die beschriebenen Teile der Anschlagvorrichtung sind zu
einem mit der Bezugszahl 60 bezeichneten Modul zusammengefaßt, welcher als vorgefertigte Baueinheit an einem
Support oder einer anderen Bewegungseinheit des Handhabungsgerätes befestigt sein kann.

Im Betrieb der Vorrichtung wird zunächst die Anschlagscheibe 20 durch das Klinkenschaltwerk 30 so weit gedreht,
bis der Sensor 58 dem Steuergerät 52 die Referenzpunktstellung meldet. Danach wird programmgesteuert die Anschlagscheibe 20 um so viele Schaltschritte weitergedreht, bis der die gewünschte Anschlagtiefe entsprechende Anschlagstift 26 mit dem Anschlagstift 14 des Schiebers
10 korrespondiert. Dieses schrittweise Weiterdrehen wird

...

vom Sensor 50 durch Abgabe von Zählimpulsen an das
Steuergerät 52 überwacht. Bei diesen Schaltvorgängen nimmt die Anschlagscheibe 20 die in der
Zeichnung dargestellte Ausgangslage ein.

Bei einem Anschlagvorgang wird der Schieber 10 zunächst durch die Anschlagscheibe 20 abgefangen, worauf der Schieber 10 die Anschlagscheibe 20 zurückschiebt, bis diese an der Stirnseite 34 zur Anlage kommt. Diese Bewegung wird durch die Einrichtung
38 und die Feder 40 gedämpft, wobei die Dämpfungswirkung zweckmäßig durch Verwendung einer einstellbaren Drossel 46 dem jeweiligen Anwendungsfall
anpaßbar ist. Wenn die Anschlagscheibe 20 an der
Stirnseite 34 anschlägt, meldet der berührungslos
angesteuerte Sensor 50 diesen Tatbestand an das
Steuergerät 52.

R. 19718

12.10.1984 Ki/Le

ROBERT BOSCH GMBH, 7000 STUTTGART 1

Ansprüche

1. Anschlagvorrichtung für bewegte Teile, insbesondere
von Handhabungsgeräten der industriellen Fertigung, mit
einer drehbar gelagerten Anschlagscheibe, welche mit
mehreren, axial und in Umfangsrichtung zueinander versetzten, vorzugsweise auf einer gemeinsamen Kreisbahn
angeordneten Anschlagflächen versehen ist, und ferner
mit einem motorischen Antrieb zum Drehen der Anschlagscheibe in die einzelnen Schaltstellungen, in denen jeweils eine Anschlagfläche in die Bahn des bewegten Teils
hineinragt, dadurch gekennzeichnet, daß die Anschlagscheibe (20) in Achsrichtung verschiebbar gelagert und
durch eine Feder (40) von einem Festanschlag (34) weg
gegen eine das bewegte Teil (10) abfangende Ausgangsstellung gedrückt ist, und daß ferner die durch das bewegte Teil (10) hervorgerufene Bewegung der Anschlagscheibe (20) in die durch den festen Anschlag (34) vorgegebene Endstellung zum berührungslosen Betätigen
eines den Anschlagvorgang abfragenden Sensors (50) ausgenutzt ist.

...

2. Vorrichtung nach Anspruch 1, dadurch gekennzeichnet, daß der Anschlagscheibe (20) eine hydraulische Dämpfungseinrichtung (38) für die Bewegungen in die durch den festen Anschlag (34) vorgegebene Endstellung zugeordnet ist.

3. Vorrichtung nach Anspruch 2, dadurch gekennzeichnet, daß die Feder (40) zum Überführen der Anschlagscheibe (20) in die das bewegte Teil (10) abfangende Ausgangsstellung in die Dämpfungseinrichtung (38) integriert ist.

4. Vorrichtung nach einem der Ansprüche 1 bis 3, dadurch gekennzeichnet, daß die Anschlagscheibe (20) an einer drehbar und verschiebbar gelagerten Achse (22) befestigt ist und daß der motorische Antrieb (30) als Klinkenschaltwerk ausgeführt ist, dessen Klinkenrad (32) unverdrehbar auf der Achse (22) der Anschlagscheibe (20) sitzt.

5. Vorrichtung nach einem der vorhergehenden Ansprüche, dadurch gekennzeichnet, daß zum berührungslosen Betätigen eines den Anschlagvorgang abfragenden Sensors (50) eine mit der Anschlagscheibe (20) fest verbundene Bedämpfungsscheibe (48) vorgesehen ist.

6. Vorrichtung nach einem der vorhergehenden Ansprüche, dadurch gekennzeichnet, daß mit der Anschlagscheibe (20) eine Steuerbuchse (54) unverdrehbar verbunden ist, welche mit einer der Anzahl der Anschlagflächen (26) an der Anschlagscheibe (20) entsprechenden Anzahl von Erhebungen versehen ist und vorzugsweise ebenfalls berührungslos mit einem Schalter (50) zum Steuern des motorischen Antriebs (30) der Anschlagscheibe (20) zusammenarbeitet.

...

7. Vorrichtung nach Anspruch 6, dadurch gekennzeichnet, daß eine Erhebung (56) der Steuerbuchse (54) nach Form und/oder Größe von den übrigen Erhebungen abweicht und mit einem weiteren Sensor bzw. Schalter (58) zur Referenzpunkteinstellung zusammenarbeitet.

8. Vorrichtung nach den Ansprüchen 5 und 6, dadurch gekennzeichnet, daß die Anschlagscheibe (20), die Bedämpfungsscheibe (48) und die Steuerbuchse (54) an einer drehbar und verschiebar gelagerten Achse (22) befestigt sind.

9. Vorrichtung nach Anspruch 8, dadurch gekennzeichnet, daß die Bedämpfungsscheibe (48) und die Steuerbuchse (54) unmittelbar nebeneinander angeordnet sind und der den Anschlagvorgang abfragende Sensor (50) auch als Sensor zum Steuern des motorischen Antriebs (30) bzw. zur Abgabe von Zählimpulsen dient.